(19) **Europäisches Patentamt / European Patent Office / Office européen des brevets**

(11) **EP 4 550 794 A1**

(12) **EUROPEAN PATENT APPLICATION**
published in accordance with Art. 153(4) EPC

(43) Date of publication:
07.05.2025 Bulletin 2025/19

(21) Application number: 23831904.0

(22) Date of filing: 28.06.2023

(51) International Patent Classification (IPC):
H04N 19/593 $^{(2014.01)}$  H04N 19/11 $^{(2014.01)}$
H04N 19/132 $^{(2014.01)}$  H04N 19/176 $^{(2014.01)}$
H04N 19/119 $^{(2014.01)}$

(52) Cooperative Patent Classification (CPC):
H04N 19/11; H04N 19/119; H04N 19/132;
H04N 19/176; H04N 19/593

(86) International application number:
PCT/KR2023/009046

(87) International publication number:
WO 2024/005545 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.06.2022 KR 20220079762

(71) Applicant: LG Electronics Inc.
Yeongdeungpo-gu
Seoul 07336 (KR)

(72) Inventors:
• YOO, Sunmi
  Seoul 06772 (KR)
• NAM, Junghak
  Seoul 06772 (KR)
• CHOI, Jangwon
  Seoul 06772 (KR)
• HONG, Myungoh
  Seoul 06772 (KR)

(74) Representative: Maikowski & Ninnemann
Patentanwälte Partnerschaft mbB
Postfach 15 09 20
10671 Berlin (DE)

(54) **IMAGE ENCODING/DECODING METHOD AND APPARATUS, AND RECORDING MEDIUM HAVING BITSTREAM STORED THEREIN**

(57) A method and apparatus for decoding/encoding an image according to the present disclosure may configure a reference sample for linear model intra prediction based on reconstructed neighboring samples of a current block, derive linear model parameters based on the reference sample, generate a prediction sample of the current block based on the linear model parameters, and decode/encode the current block based on the prediction sample of the current block.

**FIG. 4**

EP 4 550 794 A1

**Description**

[Technical Field]

The present disclosure relates to an image encoding/decoding method and apparatus, and a recording medium having a bitstream stored therein.

[Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure is directed to providing a method and apparatus for deriving a linear model based on neighboring reconstructed samples and performing intra prediction using the derived linear model.

The present disclosure is directed to providing a method and apparatus for configuring a reference sample for deriving a linear model.

The present disclosure is directed to providing a method and apparatus for effectively configuring a reference sample in consideration of a shape of a block.

The present disclosure is directed to providing a method and apparatus for designing various linear models to increase prediction accuracy.

[Technical Solution]

An image decoding method and apparatus according to the present disclosure configure a reference sample for linear model intra prediction based on reconstructed neighboring samples of a current block, derive linear model parameters based on the reference sample, and generate a prediction sample of the current block based on the linear model parameters.

In the image decoding method and apparatus according to the present disclosure, the linear model parameters may include at least one of a first linear model parameter related to a variance in a horizontal direction or a second linear model parameter related to a variance in a vertical direction.

In the image decoding method and apparatus according to the present disclosure, the reference sample may include at least one of reference samples included in a left sample line adjacent to the current block, reference samples included in an upper sample line adjacent to the current block, or an upper left reference sample adjacent to the current block.

The image decoding method and apparatus according to the present disclosure may derive the first linear model parameter and the second linear model parameter based on the reference sample, and apply a weight to at least one of the first linear model parameter or the second linear model parameter.

In the image decoding method and apparatus according to the present disclosure, the weight may be determined based on predefined encoding information.

In the image decoding method and apparatus according to the present disclosure, the predefined encoding information may include at least one of a width, a height, a size, a shape, or a ratio of the width and height of the current block.

The image decoding method and apparatus according to the present disclosure may set the reference samples included in one of the left sample line or the upper sample line to a predetermined value.

In the image decoding method and apparatus according to the present disclosure, the predetermined value may be one of an average value, a maximum value, a minimum value, or a median value of the reference samples included in one of the left sample line or the upper sample line.

In the image decoding method and apparatus according to the present disclosure, the predetermined value may be determined as a value of a first reference sample or a last reference sample based on the upper left reference sample among the reference samples included in one of the left sample line or the upper sample line.

The image decoding method and apparatus according to the present disclosure may obtain a reference line offset indicating one of multiple reference sample lines of the current block.

In the image decoding method and apparatus according to the present disclosure, the reference sample may be configured using reference samples included in a reference sample line indicated by the reference line offset.

An image encoding method and apparatus according to the present disclosure configure a reference sample for linear model intra prediction based on reconstructed neighboring samples of a current block, derive linear model parameters based on the reference sample, and generate a prediction sample of the current block based on the linear model parameters.

In the image encoding method and apparatus according to the present disclosure, the linear model parameters may include at least one of a first linear model parameter related to a variance in a horizontal direction or a second linear model parameter related to a variance in a vertical direction.

In the image encoding method and apparatus according to the present disclosure, the reference sample may include at least one of reference samples included in a left sample line adjacent to the current block, reference samples included in an upper sample line adjacent to the current block, or an upper left reference sample adjacent to the current block.

The image encoding method and apparatus according to the present disclosure may derive the first linear model parameter and the second linear model parameter based on the reference sample, and apply a weight to at least one of the first linear model parameter or the second linear model parameter.

In the image encoding method and apparatus according to the present disclosure, the weight may be determined based on predefined encoding information.

In the image encoding method and apparatus according to the present disclosure, the predefined encoding information may include at least one of a width, a height, a size, a shape, or a ratio of the width and height of the current block.

The image encoding method and apparatus according to the present disclosure may set the reference samples included in one of the left sample line or the upper sample line to a predetermined value.

In the image encoding method and apparatus according to the present disclosure, the predetermined value may be one of an average value, a maximum value, a minimum value, or a median value of the reference samples included in one of the left sample line or the upper sample line.

In the image encoding method and apparatus according to the present disclosure, the predetermined value may be determined as a value of a first reference sample or a last reference sample based on the upper left reference sample among the reference samples included in one of the left sample line or the upper sample line.

The image encoding method and apparatus according to the present disclosure may obtain a reference line offset indicating one of multiple reference sample lines of the current block.

In the image encoding method and apparatus according to the present disclosure, the reference sample may be configured using reference samples included in a reference sample line indicated by the reference line offset.

There is provided a computer-readable digital storage medium in which encoded video/image information that causes an image decoding apparatus according to the present disclosure to perform an image decoding method is stored.

There is provided a computer-readable digital storage medium in which video/image information generated according to an image encoding method according to the present disclosure is stored.

There are provided a method and apparatus for transmitting video/image information generated according to an image encoding method according to the present disclosure.

[Advantageous Effects]

According to the present disclosure, a linear model is derived based on neighboring reconstructed samples, and intra prediction is performed using the derived linear model, and thus more diverse prediction methods can be considered in prediction, prediction accuracy can be increased, and compression performance can be improved.

According to the present disclosure, prediction accuracy can be increased and compression performance can be improved by effectively configuring the reference sample for linear model derivation.

According to the present disclosure, prediction accuracy can be increased and compression performance can be improved by effectively configuring the reference sample by considering the shape of the block.

According to the present disclosure, the accuracy of prediction can be improved by providing a design method and apparatus for various linear models.

[Description of Drawings]

FIG. 1 is a video/image coding system according to the present disclosure.

FIG. 2 is a schematic block diagram of an encoding apparatus to which an embodiment of the present disclosure is applicable and encoding of video/image signals is performed.

FIG. 3 is a schematic block diagram of a decoding apparatus to which an embodiment of the present disclosure is applicable and decoding of video/image signals is performed.

FIG. 4 is a diagram illustrating an inter prediction method that is performed by a decoding apparatus (300) according to an embodiment of the present disclosure.

FIG. 5 is a diagram illustrating a schematic configuration of an intra predictor (331) for performing an intra prediction method according to the present disclosure.

FIG. 6 is a diagram illustrating an inter prediction method that is performed by an encoding apparatus (200) according to an embodiment of the present disclosure.

FIG. 7 is a diagram illustrating a schematic configuration of an intra predictor (222) for performing the intra prediction method according to the present disclosure.

FIG. 8 is a diagram illustrating an example of a content streaming system to which embodiments disclosed in the present disclosure may be applied.

[Modes of the Invention]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular region composed of a plurality of CTUs within a specific tile column and a specific tile row of one picture. A tile column is a rectangular region of CTUs having the same height as that of a picture and a width designated by a syntax requirement of a picture parameter set. A tile row is a rectangular region of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular region of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific region of a picture and information related to a corresponding region. One unit may include one luma block and two chroma (ex. cb, cr) blocks. In some cases, a unit may be used interchangeably with a term such as a block or an region, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

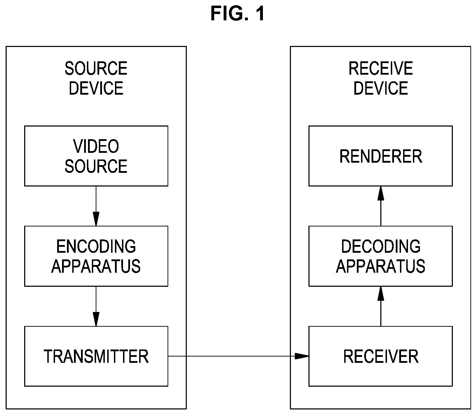

FIG. 1 is a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding apparatus and a transmission unit. The receiving device may include a reception unit, a decoding apparatus and a renderer. The encoding apparatus may be referred to as a video/image encoding apparatus and the decoding apparatus may be referred to as a video/image decoding apparatus. A transmitter may be included in an encoding apparatus. A receiver may be included in a decoding apparatus. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding apparatus may encode an input video/image. An encoding apparatus may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding apparatus.

A decoding apparatus may decode a video/an image by performing a series of procedures such as dequantization, inverse transform, prediction, etc. corresponding to an operation of an encoding apparatus.

A renderer may render a decoded video/image. A rendered video/image may be displayed through a display unit.

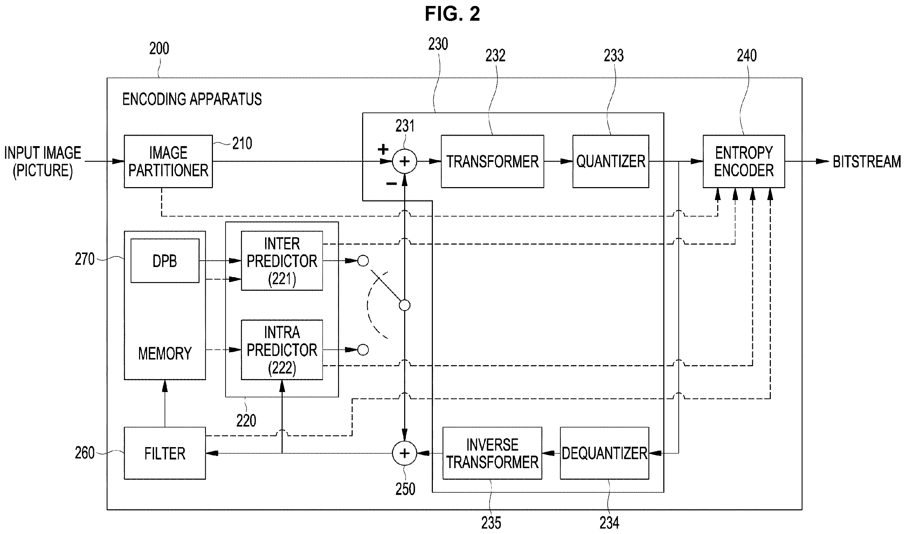

FIG. 2 is a rough block diagram of an encoding apparatus to which an embodiment of the present disclosure may be applied and encoding of a video/image signal is performed.

Referring to FIG. 2, an encoding apparatus 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) accorrding to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding apparatus 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an region, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding apparatus 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding apparatus 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a neighboring block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form.. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding apparatus to a decoding apparatus may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding apparatus 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding apparatus may avoid prediction mismatch in an encoding apparatus 200 and a decoding apparatus, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

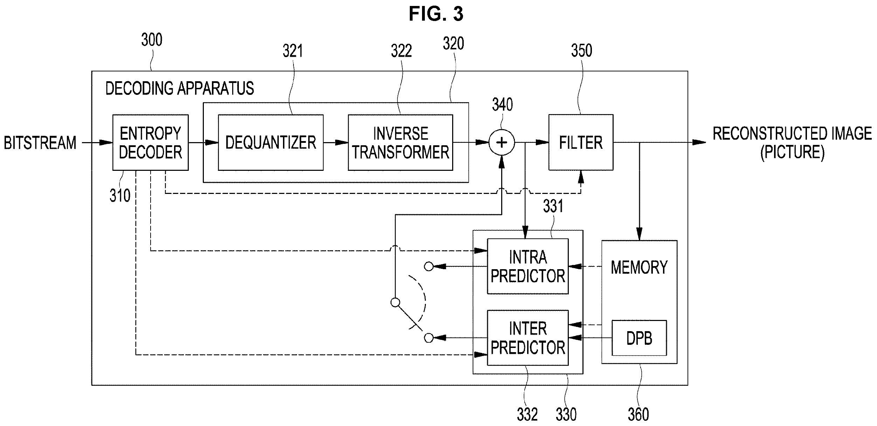

FIG. 3 is a rough block diagram of a decoding apparatus to which an embodiment of the present disclosure may be applied and decoding of a video/image signal is performed.

Referring to FIG. 3, a decoding apparatus 300 may be configured by including an entropy decoder 310, a residual processor 320, a predictor 330, an adder 340, a filter 350 and a memory 360. A predictor 330 may include an inter predictor 332 and an intra predictor 331. A residual processor 320 may include a dequantizer 321 and an inverse transformer 322.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding apparatus 300 may reconstruct an image in response to a process in which video/image information is processed in an encoding apparatus of FIG. 2. For example, a decoding apparatus 300 may derive units/blocks based on block partition-related information obtained from the bitstream. A decoding apparatus 300 may perform decoding by using a processing unit applied in an encoding apparatus. Accordingly, a processing unit of decoding may be a coding unit, and a coding unit may be partitioned from a coding tree unit or the large coding unit according to a quad tree structure, a binary tree structure and/or a ternary tree structure. At least one transform unit may be derived from a coding unit. And, a reconstructed image signal decoded and output through a decoding apparatus 300 may be played through a playback device.

A decoding apparatus 300 may receive a signal output from an encoding apparatus of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding apparatus may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a neighboring block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding apparatus may be further configured as an internal/external element of a decoding apparatus 300 or a reception unit may be a component of an entropy decoder 310.

Meanwhile, a decoding apparatus according to this specification may be referred to as a video/image/picture decoding apparatus, and the decoding apparatus may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding apparatus. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter prediction unit 332. A memory 360 may store motion information of a block from which motion information in a current picture is derived (or decoded) and/or motion information of blocks in a pre-reconstructed picture. The stored motion information may be transmitted to an inter predictor 260 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding apparatus 200 may be also applied equally or correspondingly to a filter 350, an inter predictor 332 and an intra predictor 331 of a decoding apparatus 300, respectively.

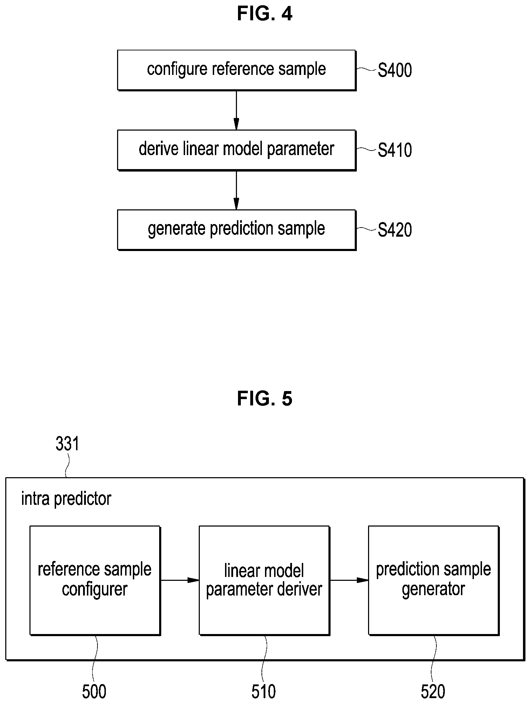

FIG. 4 is a diagram illustrating an inter prediction method that is performed by a decoding apparatus 300 according to an embodiment of the present disclosure.

The embodiment of the present disclosure provides a method of deriving a linear model based on neighboring reconstructed samples of a current block and performing intra prediction using the derived linear model. In describing the embodiment of the present disclosure, an intra prediction method using a linear model is referred to as linear model prediction, but is of course not limited to this name. In the present disclosure, the linear model prediction may also be referred to as linear model intra prediction, linear prediction, linear intra prediction, model prediction, model intra prediction, linear model-based prediction, linear model-based intra prediction, location-based linear prediction, location-based linear model prediction, location-based linear model intra prediction, etc.

Referring to FIG. 4, the decoding apparatus may construct a reference sample for linear model intra prediction based on the neighboring reconstructed samples of the current block (S400), and derive linear model parameters (or variables) based on the configured reference sample (S410). In other words, the decoding apparatus may configure a reference sample for linear model intra prediction based on the neighboring reconstructed samples of the current block, and derive (or determine) a linear model based on the configured reference sample. A linear model used for the linear model intra prediction may be derived based on the linear model parameters derived in operation S410. Hereinafter, various embodiments of a linear model-based intra prediction method will be described in detail.

According to an embodiment of the present disclosure, the linear model may be derived based on the neighboring reconstructed samples of the current block. Specifically, the linear model parameters may be derived using values and/or coordinate information (or location information) of neighboring reconstructed samples, and the linear model may be determined based on the derived linear model parameters. In the present disclosure, the linear model may also be referred to as a linear formula or a linear equation. Assuming that the current block is N×N, a prediction sample at the position (x, y) may be generated (or calculated and derived) using the following Equation 1. In other words, a linear model such as the following Equation 1 may be defined, and the prediction sample at the position (x, y) may be generated using the linear model such as the following Equation 1.

[Equation 1]

$$Pred_{(x,y)} = ax + by + c$$

In the above Equation 1, a, b, and c represent linear model parameters (or variables). In the present disclosure, c is a constant, which may be referred to as a linear model parameter or an offset. The linear model may be determined according to the linear model parameters. In addition, a and b may be referred to as horizontal (horizontal component) parameters and vertical (vertical component) parameters, respectively. Since the linear model is determined based on the linear model parameters, the linear model parameters may be the linear model or may be abbreviated as the linear model. In order to derive the parameters a, b, and c of the above Equation 1, the values and coordinate information (or location information) of already reconstructed samples around the current block may be used.

Specifically, an equation that minimizes an error between the prediction sample and the reconstructed sample may be derived through the following Equation 2 by utilizing an equation expressing a correlation between reconstructed pixel values and pixel coordinates. As described above, the term "sample" may be used to refer to the pixel in the present disclosure.

[Equation 2]

$$MSE = \frac{1}{L} \sum_{i=1}^{L} (Pred - Rec)^2$$

In the above Equation 2, L refers to the number of neighboring reconstructed samples. As an embodiment, L = 4N+1, and as in the following embodiment, L may be defined as various other numbers. In this case, as in the above Equation 1 described above, since Pred = ax+by+c and a minimum value of the squared error is 0, the following Equation 3 may be derived by performing partial differentiation on a, b, and c with respect to the above Equation 2.

[Equation 3]

$$\frac{\partial}{\partial a}\sum(Pred - Rec)^2 = \sum(ax^2 + bxy + cx) - \sum xRec$$

$$\frac{\partial}{\partial b}\sum(Pred - Rec)^2 = \sum(axy + by^2 + cy) - \sum yRec$$

$$\frac{\partial}{\partial c}\sum(Pred - Rec)^2 = \sum(ax + by + c) - \sum Rec$$

The above Equation 3 may be organized into a matrix for a, b, and c, as shown in the following Equation 4.

[Equation 4]

$$\begin{bmatrix} \sum x^2 & \sum xy & \sum x \\ \sum xy & \sum y^2 & \sum y \\ \sum x & \sum y & \sum 1 \end{bmatrix} \begin{bmatrix} a \\ b \\ c \end{bmatrix} = \begin{bmatrix} \sum xRec \\ \sum yRec \\ \sum Rec \end{bmatrix}$$

When the matrix $A = \begin{bmatrix} \sum x^2 & \sum xy & \sum x \\ \sum xy & \sum y^2 & \sum y \\ \sum x & \sum y & \sum 1 \end{bmatrix}$, the solution to $\begin{bmatrix} a \\ b \\ c \end{bmatrix}$ by Cramer's rule may be expressed as the following Equation 5.

[Equation 5]

$$a = \frac{det\ (B_0)}{det\ (A)}$$

$$b = \frac{det\ (B_1)}{det\ (A)}$$

$$c = \frac{det\ (B_2)}{det\ (A)}$$

In the above Equation 5, $B_0 = \begin{bmatrix} \sum xRec & \sum xy & \sum x \\ \sum yRec & \sum y^2 & \sum y \\ \sum Rec & \sum y & \sum 1 \end{bmatrix}$,

$B_1 = \begin{bmatrix} \sum x^2 & \sum xRec & \sum x \\ \sum xy & \sum yRec & \sum y \\ \sum x & \sum Rec & \sum 1 \end{bmatrix}$, $B_2 = \begin{bmatrix} \sum x^2 & \sum xy & \sum xRec \\ \sum xy & \sum y^2 & \sum yRec \\ \sum x & \sum y & \sum Rec \end{bmatrix}$. The matrix A may be calculated only with coordinate information. In addition, matrices B0, B1, and B2 may be calculated with coordinate information and reconstructed sample values of neighboring blocks.

As an example, it is assumed that 1) the current block is a 4×4 block, 2) a value of an upper-left reference sample adjacent to a top-left sample (or corner) of the current block is 533, 3) reference sample values included in an upper reference sample line adjacent to the right of the top-left reference sample are {514, 487, 456, 470, 535, 533, 527, 525} in order from the left, and 4) reference sample values included in a left reference sample line adjacent to the bottom of the top-left reference sample are {540, 528, 504, 489, 489, 489, 489, 489} in order from the top. In this case, the linear model parameters a, b, and c may be derived as shown in the following Equation 6.

[Equation 6]

$$a = \frac{81576}{178704} = 0.456487 \,, \quad b = \frac{-549144}{178704} = -3.07293, \quad c = \frac{90894240}{178704} = 508.6301$$

Thereafter, the linear model according to the above Equation 1 may be determined based on the calculated parameter values a, b, and c. As an example, the values of the linear model parameters calculated based on the reconstructed reference sample according to the embodiment of the present disclosure may be values that are approximated through methods such as scaling, a shift operation, a fixed-point operation, and an integer operation. Based on the derived linear model, the prediction sample may be calculated based on the location of the sample in the current block. As an example, a prediction sample (or prediction block) of a 4×4 current block may be determined as shown in Table 1 below.

[Table 1]

| 509 | 510 | 510 | 510 |
|-----|-----|-----|-----|
| 506 | 507 | 507 | 507 |
| 503 | 503 | 504 | 504 |
| 500 | 500 | 501 | 501 |

Referring to Table 1, the prediction sample of the current sample may be calculated based on the linear model to be derived and the location of the current sample in the current block. In other words, the prediction sample may be calculated on a sample-by-sample basis (i.e., a pixel-by-pixel basis) based on the derived linear model and the sample location.

In the above embodiment, the prediction block was generated by defining a linear model based on the values and coordinate information of the surrounding reconstructed samples, and obtaining parameters for the linear model according to the defined linear model. In this embodiment, a method of generating a prediction block by transforming the derived linear model parameters with weights or the like is proposed.

Referring back to Equation 1 above, parameter a is a parameter for the x-axis, and b is the parameter for the is a parameter for the y-axis. In the present disclosure, a may be referred to as a horizontal (component) parameter and b as a vertical (component) parameter and b may be referred to as a vertical (component) parameter. Alternatively, in the present disclosure, a may be referred to as a linear model parameter representing the amount of change in the horizontal direction linear model parameter representing the amount of change in the horizontal direction, and b is a linear model parameter representing the amount of change in the vertical direction.

According to an embodiment of the present disclosure, a linear model according to Equation 1 can be derived using any of the methods previously described in Equations 1 through 6, and predetermined weights (or variables) can be applied to the derived linear model parameters. In one example, the derived linear model parameters of Equation 1 may be weighted as shown in Equation 7 below. In other words, the final prediction sample may be derived (or generated) based on a model such as Equation 7.

[Equation 7]

$$WeightPred_{(x,y)} = W_0 ax + W_1 by + c$$

Referring to Equation 7, the weights $W_0$ and $W_1$ may have values $0 < W_0 \leq 1$ and $0 < W_1 \leq 1$. Here, $W_0$ and $W_1$ may be determined to be equal to each other or may be defined as different values. In Equation 7, the weights applied to the linear model parameters may be determined based on the predefined encoding information. In this case, the predefined encoding information may be at least one of a width, a height, a size, a shape, and a ratio of a width to a height of the current block.

In one embodiment, if the current block is non-rectangular, i.e., the current block has a width different from a height, there may be differences between the neighboring reconstructed sample data reflected in the horizontal parameter and the neighboring reconstructed sample data reflected in the vertical parameter in the linear model according to Equation 1. Therefore, by determining and applying weights that take this difference into account, various prediction samples can be used for prediction to improve the accuracy of the prediction.

Further, in one embodiment, $W_0=1/2$, $W_1=1$ may be determined. Alternatively, $W_0=1$, $W_1=1/2$ may be determined. For example, depending on the shape of the current block, $W_0=1/2$, $W_1=1$ may be determined, or $W_0=1$, $W_1=1/2$ may be determined. Alternatively, $W_0=1/width$, $Wi=1$ may be determined. Here, width represents the width of the current block. Alternatively, it may be determined as $W_0=1$, $W_1=1/height$. Here, height represents the height of the current block. In one example, the prediction block generated using the linear model of Equation 7 may be determined to be the final prediction block.

Alternatively, in another example, a final prediction block (or final prediction sample) may be generated by applying weighted sum to the prediction block generated based on the model of Equation 1 and the prediction block generated based on the model of Equation 7. In the present disclosure, the two forecast blocks generated using each model may be referred to as an initial prediction block or a prediction forecast block.

In one example, a promised weight between the encoder and decoder may be used as the blending ratio (i.e., weight). Alternatively, a weight that is signaled from the encoder to the decoder may be used. Alternatively, the weights may be variably determined based on the prediction mode of the neighboring blocks (e.g., intra/inter prediction information, whether a linear model is used, or whether a planar mode is used).

Alternatively, in one example, a prediction sample can be generated using Equation 7, and the generated prediction block can be blended (or weighted sum) with the prediction block generated by Equation 1 in a certain ratio to derive a final prediction sample. For example, the final prediction block may be calculated in the form FinalPred = (3*WeightPred + Pred)/4, where Pred is the prediction block generated by Equation 1.

Alternatively, the prediction block generated using Equation 7 can be derived as a final prediction sample by blending it with the prediction block generated by the planner mode in a certain ratio. For example, the final prediction block may be of the form FinalPred = (3 *WeightPred + Planar)/4. where Planar represents the prediction blocks generated by the plannar mode.

According to one embodiment of the present disclosure, a method of deriving parameters by partially utilizing or transforming already reconstructed pixels around the current block. In the linear model of Equation 1 configuring the prediction block, parameters a and b may refer to the amount of change along the x-axis (or the amount of change in the horizontal direction) and the amount of change along the y-axis (or the amount of change in the vertical direction), respectively. In this embodiment, it is proposed to use a derived neighboring reference sample for parameter calculation in order to minimize the amount of change along one axis (or in one direction) or to emphasize one axis over the other.

As an embodiment, at least one reference sample of the left reference sample or the top reference sample, can be set to a derived particular value and the linear model parameters can be derived. This allows for limiting the amount of variation in a particular direction in deriving the linear model.

For example, the top reference sample can be used, but only the derived particular sample can be used for the left reference sample. In this way, the amount of change along the x-axis can be limited when deriving a linear model. In this case, the particular sample may be the Nth sample of the left reference sample. For example, the left reference samples may all be set to the value of the first reference sample or the last reference sample of the left reference samples. The order of the reference samples may be determined by the order adjacent to the upper left reference sample of the current block.

Alternatively, a particular sample may be the average of the left reference sample. Alternatively, the particular sample may be the minimum or maximum of the left reference sample. Alternatively, the particular sample may be the median of the left reference sample. Alternatively, the particular sample may be the Nth sample of the upper reference sample. Alternatively, the particular sample may be the average of the upper reference sample. Alternatively, the particular sample may be the minimum or maximum value of the upper reference sample. Alternatively, the particular sample may be the median of the upper reference sample.

In utilizing particular samples derived by the aforementioned method, the upper reference samples may be used as reconstructed values, while reference sample smoothing may be applied to the left reference samples. The reference sample smoothing can be performed by applying a predefined n-tap filter. Here, n may be defined as 2, 3, or 5. Alternatively, in utilizing particular samples derived by the aforementioned method, reference sample smoothing may be applied to the upper reference samples, while reference sample smoothing may not be applied to the left reference samples.

For example, the left reference samples may be used as they are, while only the derived particular samples may be used for the upper reference samples. By deriving a linear model in this manner, the amount of variation along the y-axis can be limited. In this case, the particular sample may be the N-th sample of the upper reference samples. For instance, all upper reference samples may be set to the first sample value or last reference sample value of the upper reference samples. The order of the reference samples may be determined in sequence adjacent to the top-left reference sample of the current block.

Alternatively, the particular sample may be the average of the upper reference samples. The particular sample may also be the minimum or maximum value of the upper reference samples. In another case, the particular sample may be the median of the upper reference samples. Alternatively, the particular sample may be the N-th sample of the left reference samples. The particular sample may also be the average, minimum, maximum, or median value of the left reference samples.

**In** using particular samples derived by the aforementioned method, the upper reference samples may be used as reconstructed values, while reference sample smoothing may be applied to the left reference samples. The reference sample smoothing can be performed by applying a predefined n-tap filter. Alternatively, in using particular samples derived by the aforementioned method, reference sample smoothing may be applied to the upper reference samples, while reference sample smoothing may not be applied to the left reference samples.

According to the aforementioned method, the left reference samples or upper reference samples may be set to the derived particular value, and linear model parameters may be derived based on this.

Furthermore, according to one embodiment of the present disclosure, in deriving a linear model, a method is proposed that utilizes (or refer) not only the reference sample line closest to the current block among the already reconstructed areas around the current block but also a wider area (or reference sample lines). In other words, multi-reference lines including neighboring samples that are not adjacent to the current block may be used for linear model derivation. Since the embodiments use coordinate information and pixel values, the same method can be applied even when multi-reference lines are used.

For example, in the embodiments described with reference to Equations 1 to 6, the focus was on deriving linear model parameters using the first reference sample line closest to the current block. However, if the coordinate information and sample values are valid, parameters may be derived by using the values of reference samples located at a relatively farther distance. In other words, when the line offset of the neighboring reconstructed reference samples is denoted as offset, reference samples with offset > 1 may be used for parameter derivation. In the present disclosure, the line offset of the reference samples may also be referred to as a reference sample line index or reference line index. The line offset may be explicitly signaled from the encoder to the decoder or obtained (or derived) by a predefined agreement between the encoder and the decoder. When the top-left coordinate of the current block is defined as (0, 0), the reference samples for parameter derivation may be defined as shown in Equation 8 below.

[Equation 8]

$$Ref_{Above} = Rec_{x,y}, where\ 0 \le x < 2 * width + offset_{above} - 1\ and - offset_{Above} \le y$$
$$\le -1$$
$$Ref_{Left} = Rec_{x,y}\ where\ -offset_{Left} \le x \le -1\ and\ 0 \le y$$
$$\le 2 * height + offset_{left} - 1$$

Referring to Equation 8, linear model parameters may be derived by using reference samples included in the reference sample line determined by the offset. As an embodiment, the offset may be applied differently to the upper reference samples and the left reference samples or may be applied with the same value. Alternatively, parameters may be derived by using only a portion of the defined reference samples above. When defining the range of reference samples proposed in this embodiment, Offset$_{(Left,\ Above)}$ may be an integer greater than 0. For example, in the embodiments described with reference to Equations 1 to 6, the reference samples may be defined by substituting offset$_{Left}$ = 1 and offset$_{Above}$ = 1. As another example, reference samples of a length corresponding to the block size may be used. The equation for this may be defined as shown in Equation 9 below.

[Equation 9]

$$Ref_{Above} = Rec_{x,y}, where\ 0 \le x < width\ and - offset_{Above} \le y \le -1$$
$$Ref_{Left} = Rec_{x,y}\ where\ -offset_{Left} \le x \le -1\ and\ 0 \le y < height$$

Referring to Equation 9, Offset$_{(Left,\ Above)}$ may be an integer greater than 0. Additionally, as another example, for odd offsets, only reference samples where the x-coordinate (i.e., horizontal coordinate) of the left reference samples is odd or the y-coordinate (i.e., vertical coordinate) of the upper reference samples is odd may be used. For even offsets, only reference samples where the x-coordinate of the left reference samples is even or the y-coordinate of the upper reference samples is even may be used. Alternatively, the examples mentioned above may be combined and used.

The decoding apparatus may generate prediction samples for the current block based on the linear model parameters (S420). In other words, the decoding apparatus may perform intra prediction for the current block based on the derived linear model parameters (or linear model). Prediction samples may be generated on a per-sample basis according to the position of the current sample within the current block based on the derived linear model.

FIG. 5 illustrates a schematic configuration of the intra prediction unit 331 that performs the intra prediction method according to the present disclosure.

Referring to FIG. 5, the intra predictior 331 may include a reference sample configurer 500, a linear model parameter deriver 510, and a prediction sample generator 520.

Specifically, the reference sample configurer 500 may configure reference samples for linear model intra prediction based on reconstructed neighboring samples of the current block. The linear model parameter deriver 510 may derive linear model parameters (or variables) based on the configured reference samples. In other words, the reference sample configurer 500 may configure reference samples for linear model intra prediction based on reconstructed neighboring samples of the current block, and the linear model parameter deriver 510 may derive (or determine) a linear model based on the configured reference samples. The linear model used for linear model intra prediction may be derived according to the linear model parameters derived by the linear model parameter deriver 510. Various embodiments of the linear model-based intra prediction method were previously described with reference to FIG. 4, and redundant descriptions will be omitted.

As described above, the linear model parameter deriver 510 may derive the linear model based on the reconstructed samples around the current block. Specifically, the linear model parameter deriver 510 may derive linear model parameters using values and/or coordinate information (or position information) of the neighboring reconstructed samples, and the linear model may be determined according to the derived linear model parameters. At this time, the linear model, as described in Equation 1, may be defined, and prediction samples at the (x, y) position may be generated using the linear model described in Equation 1.

As described above, the linear model parameter deriver 510 may modify the derived linear model parameters, such as by applying weights, to generate a prediction block. The linear model parameter deriver 510 may derive the linear model according to Equation 1 by the methods described with reference to Equations 1 to 6 and apply predetermined weights (or variables) to the derived linear model parameters. For example, weights as described in Equation 7 may be applied to the derived linear model parameters of Equation 1. Redundant descriptions are omitted.

The linear model according to Equation 1 may have its linear model parameter values changed depending on which reference samples among the neighboring reference samples of the current block are used. Therefore, as described above, the linear model parameter deriver 510 may derive parameters by utilizing or modifying only some of the already reconstructed pixels around the current block. The linear model parameter deriver 510 may set at least one of the left reference samples or upper reference samples to a particular value derived and derive the linear model parameters.

For example, the upper reference samples may be used as they are, while only derived particular samples may be used for the left reference samples. By deriving the linear model in this manner, the amount of variation along the x-axis can be limited. At this time, the particular sample may be the N-th sample of the left reference samples. For example, all left reference samples may be set to the first sample value or last reference sample value of the left reference samples. The order of the reference samples may be determined in sequence adjacent to the top-left reference sample of the current block.

Alternatively, the particular sample may be the average of the left reference samples. Alternatively, the particular sample may also be the minimum or maximum value of the left reference samples. Alternatively, the particular sample may be the median of the left reference samples. Alternatively, the particular sample may also be the N-th sample of the upper reference samples. Alternatively, the particular sample may be the average, minimum, maximum, or median value of the upper reference samples.

In using particular samples derived by the aforementioned method, the upper reference samples may be used as reconstructed values, while reference sample smoothing may be applied to the left reference samples. The reference sample smoothing can be performed by applying a predefined n-tap filter. Alternatively, in using particular samples derived by the aforementioned method, reference sample smoothing may be applied to the upper reference samples, while reference sample smoothing may not be applied to the left reference samples.

Additionally, as described above, multi-reference lines including neighboring samples that are not adjacent to the current block may be used for linear model derivation. Since the embodiments described with reference to FIG. 4 use coordinate information and pixel values, the same method may be applied even when multi-reference lines are used.

The prediction sample generator 520 may generate prediction samples for the current block based on the linear model parameters. In other words, the prediction sample generator 520 may perform intra prediction for the current block based on the derived linear model parameters (or linear model). Prediction samples may be generated on a per-sample basis according to the position of the current sample within the current block based on the derived linear model.

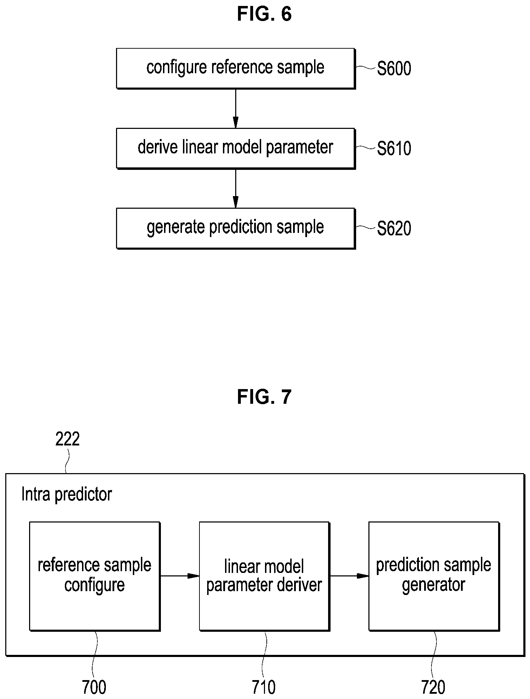

FIG. 6 illustrates an example of an inter prediction method performed by the encoding apparatus 200 according to an embodiment of the present disclosure.

In one embodiment of the present disclosure, a linear model intra prediction method performed by the encoding apparatus is described. The encoding apparatus may derive a linear model based on reconstructed samples aroouund the current block and perform intra prediction using the derived linear model. The embodiments described with reference to FIGS. 4 and 5 regarding linear model intra prediction may be applied in substantially the same manner, and redundant descriptions are omitted.

Referring to FIG. 6, the encoding apparatus may configure reference samples for linear model intra prediction based on the reconstructed neighboring samples of the current block (S600) and derive linear model parameters (or variables) based on the configured reference samples (S610). In other words, the encoding apparatus may configure reference samples for linear model intra prediction based on the reconstructed neighboring samples of the current block and derive (or determine) a linear model based on the configured reference samples. The linear model used for linear model intra prediction may be derived according to the linear model parameters derived in step S610.

The encoding apparatus may derive a linear model based on the reconstructed samples around the current block. Specifically, the encoding apparatus may derive linear model parameters using values and/or coordinate information (or position information) of the neighboring reconstructed samples, and the linear model may be determined according to the derived linear model parameters. At this time, a linear model such as the one described in Equation 1 may be defined, and prediction samples at the (x, y) position may be generated using the linear model described in Equation 1.

As described above, the encoding apparatus may generate a prediction block by modifying the derived linear model parameters with weights or the like. The encoding apparatus may derive the linear model according to Equation 1 by the methods described with reference to Equations 1 to 6 and apply predetermined weights (or variables) to the derived linear model parameters. For example, weights such as those described in Equation 7 may be applied to the derived linear model parameters of Equation 1. Redundant descriptions are omitted.

The linear model according to Equation 1 may have its linear model parameter values changed depending on which reference samples among the neighboring reference samples of the current block are used. Therefore, as described above, the encoding apparatus may derive parameters by utilizing or modifying only some of the already reconstructed pixels around the current block. The encoding apparatus may set at least one of the left reference samples or upper reference samples to a derived particular value and derive the linear model parameters.

For example, the upper reference samples may be used as they are, while only derived particular samples may be used for the left reference samples. By deriving the linear model in this manner, the amount of variation along the x-axis can be limited. At this time, the particular sample may be the N-th sample of the left reference samples. For example, all left reference samples may be set to the first reference sample value or last reference sample value of the left reference samples. The order of the reference samples may be determined in sequence adjacent to the top-left reference sample of the current block.

Alternatively, the particular sample may be the average of the left reference samples. Alternatively, the particular sample may also be the minimum or maximum value of the left reference samples. Alternatively, the particular sample may be the median of the left reference samples. Alternatively, the particular sample may also be the N-th sample of the upper reference samples. Alternatively, the particular sample may be the average, minimum, maximum, or median value of the upper reference samples.

In using particular samples derived by the aforementioned method, the upper reference samples may be used as reconstructed values, while reference sample smoothing may be applied to the left reference samples. The reference sample smoothing can be performed by applying a predefined n-tap filter. Alternatively, in utilizing particular samples derived by the aforementioned method, reference sample smoothing may be applied to the upper reference samples, while reference sample smoothing may not be applied to the left reference samples.

Additionally, as described above, multi-reference lines including neighboring samples that are not adjacent to the current block may be used for linear model derivation. Since the embodiments described with reference to FIG. 4 use coordinate information and pixel values, the same method may be applied even when multi-reference lines are used.

The encoding apparatus may generate prediction samples for the current block based on the linear model parameters (S620). In other words, the encoding apparatus may perform intra prediction for the current block based on the derived linear model parameters (or linear model). Prediction samples may be generated on a per-sample basis according to the position of the current sample within the current block based on the derived linear model.

FIG. 7 illustrates a schematic configuration of the intra predictor 222 that performs the inter prediction method according to the present disclosure.

Referring to FIG. 7, the intra predictor 222 may include a reference sample configurer 700, a linear model parameter deriver 710, and a prediction sample generator 720.

Specifically, the reference sample configurer 700 may configure reference samples for linear model intra prediction based on the reconstructed neighboring samples of the current block. The linear model parameter deriver 710 may derive linear model parameters (or variables) based on the configured reference samples. In other words, the reference sample configurer 700 may configure reference samples for linear model intra prediction based on the reconstructed neighboring samples of the current block, and the linear model parameter deriver 710 may derive (or determine) a linear model based on the configured reference samples. A linear model used for linear model intra prediction may be derived according to the linear model parameters derived by the linear model parameter deriver 710. Various embodiments of the linear model-based intra prediction method were previously described with reference to FIG. 4, and redundant descriptions will be omitted.

As described above, the linear model parameter deriver 710 may derive the linear model based on the reconstructed samples surrounding the current block. Specifically, the linear model parameter deriver 710 may derive linear model parameters using values and/or coordinate information (or position information) of the neighboring reconstructed samples, and the linear model may be determined according to the derived linear model parameters. At this time, a linear model such as the one described in Equation 1 may be defined, and prediction samples at the (x, y) position may be generated using the linear model described in Equation 1.

As described above, the linear model parameter deriver 710 may generate a prediction block by modifying the derived linear model parameters with weights or the like. The linear model parameter deriver 710 may derive the linear model according to Equation 1 by the methods described with reference to Equations 1 to 6 and apply predetermined weights (or variables) to the derived linear model parameters. For example, weights such as those described in Equation 7 may be applied to the derived linear model parameters of Equation 1. Redundant descriptions are omitted.

The linear model according to Equation 1 may have its linear model parameter values changed depending on which reference samples among the neighboring reference samples of the current block are used. Therefore, as described above, the linear model parameter deriver 710 may derive parameters by utilizing or modifying only some of the already reconstructed pixels around the current block. The linear model parameter deriver 710 may set at least one of the left reference samples or upper reference samples to a derived particular value and derive the linear model parameters.

For example, the upper reference samples may be used as they are, while only derived particular samples may be used for the left reference samples. By deriving the linear model in this manner, the amount of variation along the x-axis can be limited. At this time, the particular sample may be the N-th sample of the left reference samples. For example, all left reference samples may be set to the first reference value or last reference sample value of the left reference samples. The order of the reference samples may be determined in sequence adjacent to the top-left reference sample of the current block.

Alternatively, the particular sample may be the average of the left reference samples. Alternatively, the particular sample may also be the minimum or maximum value of the left reference samples. Alternatively, the particular sample may be the median of the left reference samples. Alternatively, the particular sample may also be the N-th sample of the upper reference samples. Alternatively, the particular sample may be the average, minimum, maximum, or median value of the upper reference samples.

In using particular samples derived by the aforementioned method, the upper reference samples may be used as reconstructed values, while reference sample smoothing may be applied to the left reference samples. The reference sample smoothing can be performed by applying a predefined n-tap filter. Alternatively, in utilizing particular samples derived by the aforementioned method, reference sample smoothing may be applied to the upper reference samples, while reference sample smoothing may not be applied to the left reference samples.

Additionally, as described above, multi-reference lines including neighboring samples that are not adjacent to the current block may be used for linear model derivation. Since the embodiments described with reference to FIG. 4 use coordinate information and pixel values, the same method may be applied even when multi-reference lines are used.

The prediction sample generator 720 may generate prediction samples for the current block based on the linear model parameters. In other words, the prediction sample generator 720 may perform intra prediction for the current block based on the derived linear model parameters (or linear model). Prediction samples may be generated on a per-sample basis according to the position of the current sample within the current block based on the derived linear model.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding apparatus and/or a decoding apparatus according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding apparatus and an encoding apparatus to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

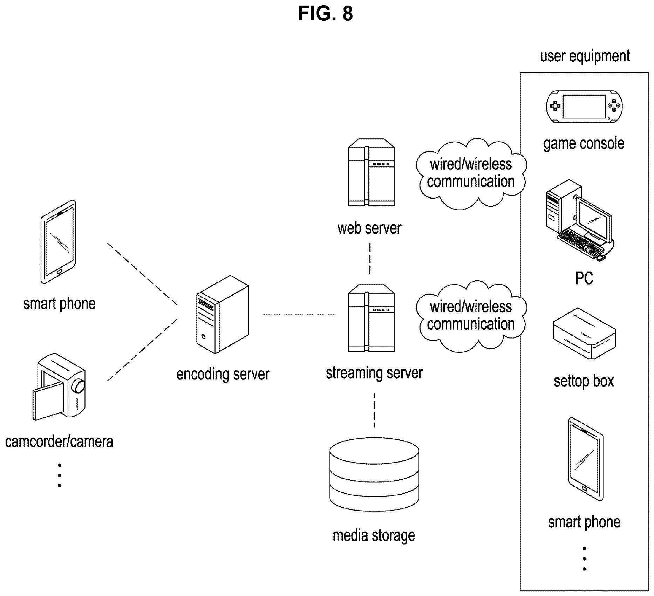

FIG. 8 is an example of a contents streaming system to which embodiments of the present disclosure may be applied.

Referring to FIG. 8, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD)), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a apparatus claim may be combined and implemented as a apparatus, and a technical characteristic of a method claim of the present disclosure and a technical characteristic of a apparatus claim may be combined and implemented as a method.

**EP 4 550 794 A1**

Claims

1. An image decoding method comprising:

   configuring a reference sample for linear model intra prediction based on reconstructed neighboring samples of a current block;
   deriving linear model parameters based on the reference sample, the linear model parameters including at least one of a first linear model parameter related to a variance in a horizontal direction or a second linear model parameter related to a variance in a vertical direction; and
   generating a prediction sample of the current block based on the linear model parameters.

2. The image decoding method according to claim 1, wherein the reference sample includes at least one of reference samples included in a left sample line adjacent to the current block, reference samples included in an upper sample line adjacent to the current block, or an upper left reference sample adjacent to the current block.

3. The image decoding method according to claim 1, the deriving of the linear model parameters includes:

   deriving the first linear model parameter and the second linear model parameter based on the reference sample; and
   applying a weight to at least one of the first linear model parameter or the second linear model parameter.

4. The image decoding method according to claim 3, wherein the weight is determined based on predefined encoding information.

5. The image decoding method according to claim 4, wherein the predefined encoding information includes at least one of a width, a height, a size, a shape, or a ratio of the width and height of the current block.

6. The image decoding method according to claim 2, wherein the configuring of the reference sample includes setting the reference samples included in one of the left sample line or the upper sample line to a predetermined value.

7. The image decoding method according to claim 6, wherein the predetermined value is one of an average value, a maximum value, a minimum value, or a median value of the reference samples included in one of the left sample line or the upper sample line.

8. The image decoding method according to claim 6, wherein the predetermined value is determined as a value of a first reference sample or a last reference sample based on the upper left reference sample among the reference samples included in one of the left sample line or the upper sample line.

9. The image decoding method according to claim 1, further comprising obtaining a reference line offset indicating one of multiple reference sample lines of the current block,
   wherein the reference sample is constructed using reference samples included in a reference sample line indicated by the reference line offset.

10. An image encoding method comprising:

    configuring a reference sample for linear model intra prediction based on reconstructed neighboring samples of a current block;
    deriving linear model parameters based on the reference sample, the linear model parameters including at least one of a first linear model parameter related to a variance in a horizontal direction or a second linear model parameter related to a variance in a vertical direction; and
    generating a prediction sample of the current block based on the linear model parameters.

11. A computer-readable storage medium configured to store a bitstream generated by the image encoding method according to claim 10.

12. A method of transmitting data of image information, comprising:

    configuring a reference sample for linear model intra prediction based on reconstructed neighboring samples of a current block;
deriving linear model parameters based on the reference sample, the linear model parameters including at least one of a first linear model parameter related to a variance in a horizontal direction or a second linear model parameter related to a variance in a vertical direction;
generating a prediction sample of the current block based on the linear model parameters;
generating a bitstream by encoding the current block based on the prediction sample; and
transmitting data including the bitstream.

## FIG. 1

**FIG. 2**

EP 4 550 794 A1

## FIG. 3

BITSTREAM → ENTROPY DECODER → DEQUANTIZER → INVERSE TRANSFORMER → + → FILTER → RECONSTRUCTED IMAGE (PICTURE)

DECODING APPARATUS

INTRA PREDICTOR

INTER PREDICTOR

MEMORY

DPB

300
321
322
320
340
350
310
331
332
330
360

**FIG. 4**

configure reference sample ~S400

↓

derive linear model parameter ~S410

↓

generate prediction sample ~S420

**FIG. 5**

331

intra predictor

| reference sample configurer | → | linear model parameter deriver | → | prediction sample generator |

500　　　　　　　　510　　　　　　　　520

## FIG. 6

configure reference sample — S600

↓

derive linear model parameter — S610

↓

generate prediction sample — S620

## FIG. 7

222

Intra predictor

| reference sample configure | → | linear model parameter deriver | → | prediction sample generator |

700

710

720

# FIG. 8

## INTERNATIONAL SEARCH REPORT

| International application No. |
|---|
| **PCT/KR2023/009046** |

**A. CLASSIFICATION OF SUBJECT MATTER**

**H04N 19/593**(2014.01)i; **H04N 19/11**(2014.01)i; **H04N 19/132**(2014.01)i; **H04N 19/176**(2014.01)i; **H04N 19/119**(2014.01)i

According to International Patent Classification (IPC) or to both national classification and IPC

**B. FIELDS SEARCHED**

Minimum documentation searched (classification system followed by classification symbols)

H04N 19/593(2014.01); H04N 19/105(2014.01); H04N 19/107(2014.01); H04N 19/11(2014.01); H04N 19/117(2014.01); H04N 19/50(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 복원(reconstruct), 주변(adjacent), 샘플(sample), 선형(linear), 모델(model)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0083321 A (ELECTRONICS AND TELECOMMUNICATIONS RESEARCH INSTITUTE et al.) 08 July 2020 (2020-07-08) <br> See paragraphs [0006], [0113], [0125], [0192], [0195] and [0197]; claims 1 and 7-9; and figure 7. | 1-12 |
| Y | GHAZNAVI-YOUVALARI, Ramin. Non-CE3: Linear Model-based Intra Prediction (LMIP). JVET-O0404, Joint Video Experts Team (JVET) of ITU-T SG 16 WP 3 and ISO/IEC JTC 1/SC 29/WG 11, 15th Meeting: Gothenburg, SE. pp. 1-3, 02 July 2019. <br> See pages 1-2; and figure 1. | 1-12 |
| A | US 11290736 B1 (LEMON INC.) 29 March 2022 (2022-03-29) <br> See claims 1-18. | 1-12 |
| A | KR 10-2021-0125086 A (HUAWEI TECHNOLOGIES CO., LTD.) 15 October 2021 (2021-10-15) <br> See claims 1-12. | 1-12 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 October 2023** | **10 October 2023** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/009046**

**C.      DOCUMENTS CONSIDERED TO BE RELEVANT**

| Category* | Citation of document, with indication, where appropriate, of the relevant passages | Relevant to claim No. |
|---|---|---|
| A | KR 10-2018-0026718 A (LG ELECTRONICS INC.) 13 March 2018 (2018-03-13)<br>      See claims 1-18. | 1-12 |

Form PCT/ISA/210 (second sheet) (July 2022)

**INTERNATIONAL SEARCH REPORT**
Information on patent family members

International application No.

**PCT/KR2023/009046**

| Patent document cited in search report | | | Publication date (day/month/year) | Patent family member(s) | | | Publication date (day/month/year) |
|---|---|---|---|---|---|---|---|
| KR | 10-2020-0083321 | A | 08 July 2020 | CN | 113330742 | A | 31 August 2021 |
| | | | | US | 2022-0109846 | A1 | 07 April 2022 |
| | | | | WO | 2020-139008 | A1 | 02 July 2020 |
| US | 11290736 | B1 | 29 March 2022 | CN | 114765685 | A | 19 July 2022 |
| | | | | US | 2022-0232241 | A1 | 21 July 2022 |
| KR | 10-2021-0125086 | A | 15 October 2021 | CN | 113545063 | A | 22 October 2021 |
| | | | | CN | 113545063 | B | 28 April 2023 |
| | | | | EP | 3928517 | A1 | 29 December 2021 |
| | | | | JP | 2022-521757 | A | 12 April 2022 |
| | | | | US | 2021-0385440 | A1 | 09 December 2021 |
| | | | | WO | 2020-169113 | A1 | 27 August 2020 |
| KR | 10-2018-0026718 | A | 13 March 2018 | US | 10848759 | B2 | 24 November 2020 |
| | | | | US | 2018-0234679 | A1 | 16 August 2018 |
| | | | | WO | 2017-018664 | A1 | 02 February 2017 |

Form PCT/ISA/210 (patent family annex) (July 2022)